# DEMANDE DE BREVET EUROPEEN

(11) **EP 1 793 482 A1**
(43) Date de publication de la demande: **06.06.2007**
(21) Numéro de dépôt: 06301180.3
(22) Date de dépôt: 24.11.2006
(51) Int. Cl.: H02K 29/03

(54) **Machine électrique tournante à ondulations de couple réduites**

(30) Priorité: 02.12.2005 FR 0553707
(71) Demandeur: MOTEURS LEROY-SOMER, 16015 Angouleme Cédex (FR)
(72) Inventeur: Abou-Akar, Atef, 16430, VINDELLE (FR); Coupart, Eric, 16000, ANGOULEME (FR)
(74) Mandataire: Tanty, François

(57) **Abrégé**

La présente invention concerne une machine électrique tournante comportant :
- un stator (2) à bobine concentré, comportant des dents (4) et des bobines (5) disposées sur les dents, ces dernières ayant des faces d'extrémité convexes vers le rotor,
- un rotor (3) comportant une armature (12) définissant une surface cylindrique des aimants permanents (14), ces derniers ayant des faces intérieures qui sont des portions de cylindre épousant la forme de la surface cylindrique de l'armature et des faces extérieures qui sont sensiblement planes dirigées vers le stator.

## Description

La présente invention concerne les machines électriques tournantes et plus particulièrement mais non exclusivement celles utilisées pour l'entraînement des cabines d'ascenseur.

Le brevet français 2 802 724 rappelle qu'il est connu de réaliser un rotor intérieur ayant des aimants permanents présentant des faces tournées vers le stator qui sont convexes et un stator dont les dents présentent des faces d'extrémité concaves vers le rotor.

Ce brevet antérieur décrit une machine tournante dans laquelle les faces d'extrémité des dents sont convexes vers le rotor et les aimants présentent des faces dirigées vers le stator qui sont cylindriques autour de l'axe de rotation.

La demande EP 1 349 261 divulgue un moteur pour ascenseur comportant un stator dont les dents sont pourvues d'épanouissements polaires et un rotor comportant des aimants permanents.

Les demandes JP 10-164777, JP 07-308057 et le brevet US 5 138 213 divulguent des moteurs ayant un rotor extérieur dont les aimants permanents présentent des faces principales opposées cylindriques, d'axe confondu avec l'axe de rotation.

La demande EP 1 104 077 divulgue un moteur dont les dents du stator présentent des épanouissements polaires.

La demande britannique GB 2 345 586 décrit des moteurs à aimants permanents.

La demande US 2004/0140725 et la demande WO 03/052901 divulguent des moteurs comportant un stator dont les dents présentent des épanouissements polaires et un rotor dont les aimants présentent des faces principales opposées qui sont planes.

Il est souhaitable que les moteurs électriques utilisés pour entraîner les cabines d'ascenseur génèrent le moins possible de vibrations, car celles-ci sont susceptibles d'être transmises à la cabine, ce qui peut compromettre le confort des passagers.

Une demande existe pour diminuer l'encombrement des moteurs afin par exemple de faciliter l'implantation des ascenseurs.

Une solution pour y parvenir consiste d'une part à utiliser des moteurs sans engrenages ou avec un facteur de réduction relativement faible et d'autre part à faire tourner le rotor plus vite.

Or, l'augmentation de la vitesse nominale augmente le risque de tomber sur des fréquences de résonance lors des phases de démarrage et de décélération ainsi qu'en marche à vitesse nominale.

Il existe par conséquent un besoin pour bénéficier de machines électriques tournantes ayant un encombrement relativement faible, capables de tourner à une vitesse relativement élevée, tout en réduisant les bruits et vibrations.

L'invention vise à répondre à ce besoin.

L'invention a ainsi pour objet, selon l'un de ses aspects, une machine électrique tournante comportant :
- un stator comportant des dents et des bobines disposées sur les dents, ces dernières ayant des faces d'extrémité convexes vers le rotor,
- un rotor comportant des aimants permanents, ces derniers ayant des faces sensiblement planes dirigées vers le stator.

L'invention permet de bénéficier d'une machine dans laquelle les ondulations de couple sont relativement faibles d'une part et d'autre part de couple relativement élevé.

Le rotor peut être extérieur, ce qui peut lui permettre notamment de tourner à une vitesse relativement élevée en limitant le risque de détachement des aimants et peut faciliter l'entraînement de câbles d'ascenseur. En variante, le rotor peut être intérieur.

Les aimants peuvent être monolithiques ou non.

Les faces planes des aimants sont avantageusement orientées sensiblement perpendiculairement aux rayons passant par l'axe de rotation et coupant les aimants à mi-longueur.

Les faces d'extrémité des dents sont par exemple des portions de cylindre, qui peuvent avoir un rayon de courbure plus faible que la distance séparant le sommet des dents de l'axe de rotation.

Le nombre de pôles P au rotor est par exemple compris entre 8 et 32 et le nombre de dents S au stator est par exemple compris entre 12 et 48. La relation entre les nombres de pôles au rotor et de dents au stator satisfait par exemple l'une des relations suivantes :
- S/P=3/2 ou S/P=3/4
- S=6n P=6n+/-2 avec n nombre entier supérieur ou égal à 1
- S=3(2n+1) et P=2(4n+3) avec n entier supérieur ou égal à 1
- S=3n et P=(3+/-1)n avec n entier supérieur ou égal à 1
- S=2n et P=2(2n+/-1) avec n entier supérieur ou égal à 2
- S=10n et P=2(5n+/-1)
- S=6n et P=2(3n+/-3)

Les dents du stator peuvent avoir des premières extrémités axiales et des deuxièmes extrémités axiales décalées angulairement par rapport aux premières.

Un tel décalage contribue à réduire les ondulations de couple lorsque les dents sont dépourvues d'épanouissements polaires, ce qui est le cas pour un stator à bobinage concentré.

Le décalage angulaire peut être supérieur ou égal à 0,9.2Π/3P, mieux égal à 2Π/3P, où P désigne le nombre de pôles rotor.

Le décalage angulaire peut être supérieur ou égal à 0,9.Π/S, mieux égal à Π/S, où S désigne le nombre d'encoches stator, dans le cas où Π/S est supérieur à 2Π/3P.

L'invention a encore pour objet, selon un autre de ses aspects, un procédé d'entraînement d'une cabine d'ascenseur, consistant à utiliser une machine telle que définie plus haut, sans réduction ou avec un rapport de réduction inférieur ou égal à 4.

L'invention a encore pour objet un ascenseur comportant une machine telle que définie plus haut pour entraîner la cabine.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique une machine tournante selon l'invention,
- les figures 2 et 3 sont des coupes partielles et schématiques de la machine de la figure 1,
- la figure 4 est une vue analogue à la figure 2 d'une variante de mise en oeuvre de l'invention, et
- les figures 5 et 6 représentent isolément le stator, de manière schématique, respectivement en perspective et en vue de dessus.

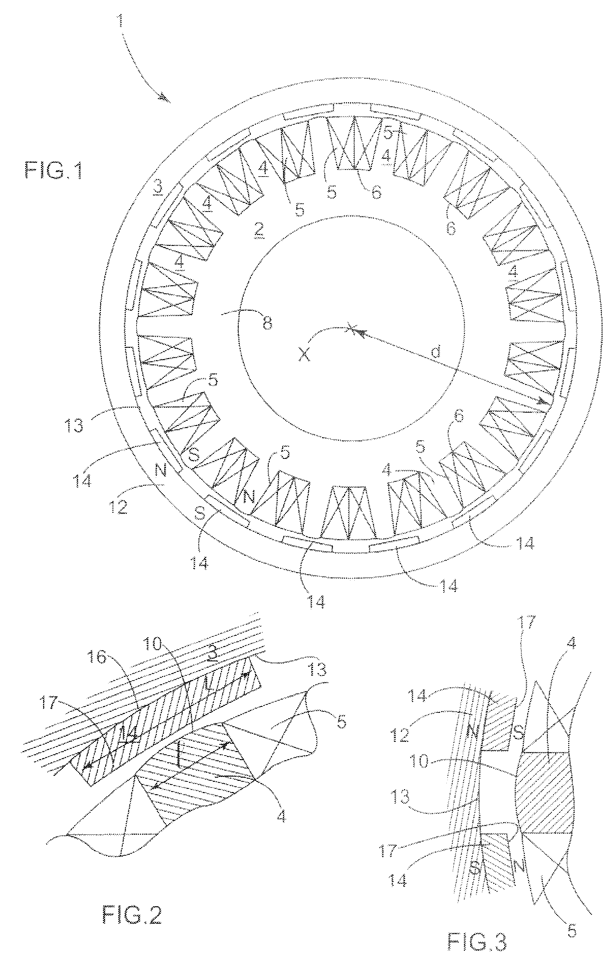

La machine électrique tournante 1 représentée à la figure 1 comporte un stator intérieur 2 et un rotor extérieur 3 pouvant tourner autour d'un axe de rotation X.

Le stator 2 comporte une pluralité de dents 4, par exemple dix-huit, sur lesquelles sont disposées des bobines respectives 5, le stator 2 étant par exemple à bobinage concentré.

Les dents 4 sont dépourvues d'épanouissements polaires.

Les bobines 5 sont par exemple fabriquées à part et engagées après leur fabrication sur les dents 4.

Le stator 2 peut comporter des cales non représentées fermant les encoches 6 recevant les bobines 5.

Les dents 4 se raccordent, dans l'exemple considéré, à une culasse annulaire 8.

Les dents 4 et la culasse 8 sont par exemple formées d'un empilage de tôles magnétiques vernies. Chaque tôle comporte par exemple autant d'encoches et de dents que le stator. En variante, les dents 4 sont portées par des secteurs assemblés.

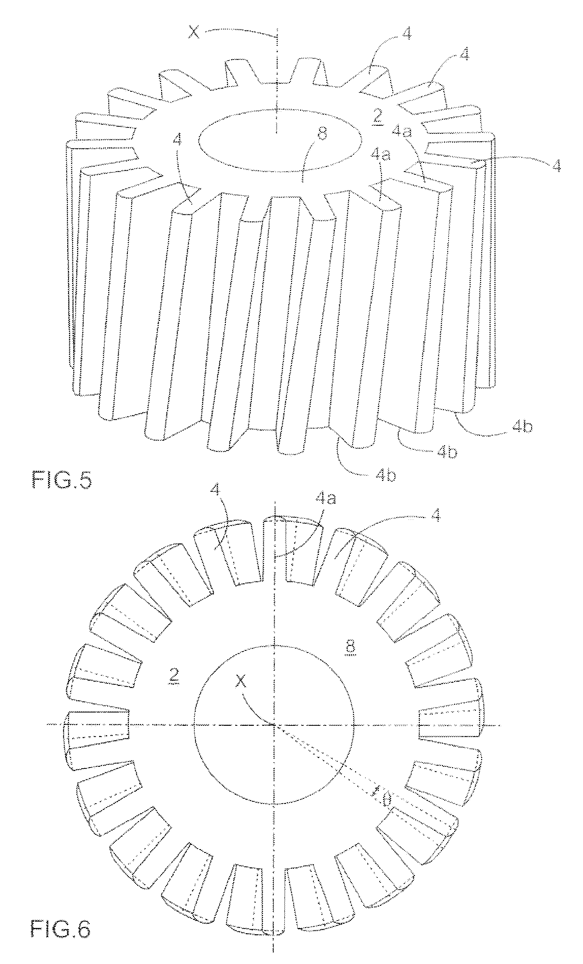

Les dents 4 sont de préférence inclinées, comme illustré aux figures 5 et 6.

Les dents présentent des premières extrémités axiales 4a qui sont décalées angulairement par rapport à des deuxièmes extrémités axiales opposées 4b, relativement à l'axe de rotation X.

Le décalage θ vaut par exemple 2Π/3P, où P désigne le nombre de pôles rotor.

Le cas échéant, pour pallier à des défauts géométriques de concentricité par exemple, cette valeur peut être augmentée jusqu'à Π/S, où S désigne le nombre d'encoches stator, dans le cas où Π/S est supérieur à 2Π/3P.

L'inclinaison des dents 4 du stator améliore encore la réduction des oscillations de couple en l'absence d'épanouissements polaires.

Selon un aspect de l'invention, les dents 4 présentent des faces d'extrémité 10 qui sont convexes vers le rotor 3. Ces faces d'extrémité présentent par exemple une forme de portion de cylindre, de génératrice parallèle à l'axe X et de rayon de courbure inférieur à la distance *d* entre l'axe X et le sommet des dents 4. Le rayon de courbure vaut par exemple 0,5 à 0,7 fois cette distance *d.*

Le rotor 3 tourne sur des roulements non apparents.

Le rotor 3 comporte une armature 12 de forme annulaire, ayant une surface radialement intérieure 13 sur laquelle sont fixés des aimants permanents 14, par exemple au nombre de seize.

L'armature 12 est par exemple formée par un empilage de tôles magnétiques vernies.

La surface radialement intérieure 13 est par exemple cylindrique de révolution d'axe X et les aimants 14 présentent une face intérieure 16 qui est une portion de cylindre, étant adaptée à épouser sensiblement la forme de la surface radialement intérieure 13 de l'armature 12. Les aimants sont par exemple collés par leur face 16 sur l'armature 12.

La surface cylindrique 16 des aimants permet d'avoir une surface de collage relativement étendue et donc une bonne tenue mécanique.

Dans l'exemple illustré chaque aimant 14 présente une face extérieure 17, dirigée vers le stator, qui est plane.

Les faces extérieures 17 des aimants 14 sont perpendiculaires aux rayons qui passent par l'axe X et qui coupent les aimants 14 à mi-longueur.

Dans l'exemple illustré, les aimants 14 sont monolithiques mais on ne sort pas du cadre de la présente invention si les aimants 14 sont fragmentés, afin par exemple de réduire les pertes par courants induits.

La direction d'aimantation des aimants 14 est sensiblement radiale, et les polarités des aimants 14 alternent dans le sens circonférentiel.

La dimension longitudinale *L* des aimants est par exemple comprise entre 1,5 et 2,5 fois la largeur *l* des dents 4.

La variation de l'épaisseur de l'entrefer entre les faces d'extrémité 10 et les faces extérieures 17 permet de bénéficier d'un couple relativement élevé tout en réduisant les ondulations de couple.

Ainsi, le bruit et les vibrations générés par la machine sont relativement faibles.

L'entraînement d'un ou plusieurs câbles d'ascenseur peut se faire sans engrenage, au moins une gorge de poulie étant par exemple formée sur le rotor extérieur ou celui-ci étant accouplé à une poulie. En variante, le rotor peut entraîner une poulie par l'intermédiaire d'un réducteur ayant un rapport de réduction relativement faible, par exemple allant de 1 à 4.

Pour l'entraînement d'une cabine d'ascenseur, la vitesse nominale de rotation est par exemple comprise entre 48 et 355 tours par minute.

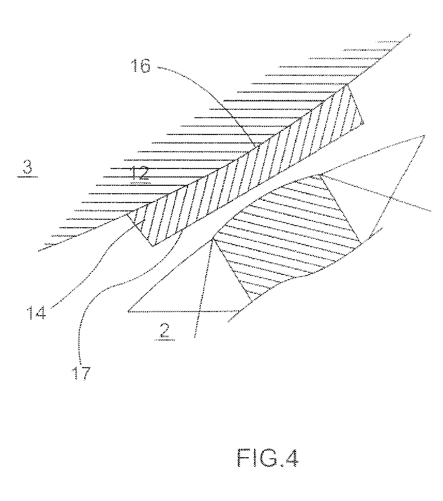

Le rotor 3 peut encore être un rotor intérieur, comme illustré à la figure 4. Dans ce cas, chaque aimant 14 présente une face extérieure 17 tournée vers le stator qui est sensiblement plane et perpendiculaire à un rayon passant par l'axe du rotor et coupant l'aimant à mi-longueur.

Les aimants 14 peuvent présenter une face intérieure 16 opposée au stator qui est concave, adaptée à épouser la forme de l'armature 12 du rotor.

L'invention n'est pas limitée aux exemples qui viennent d'être décrits et le rotor peut par exemple comporter un nombre de pôles différents, de même que pour les dents du stator.

La machine peut être utilisée non seulement en moteur mais également en générateur, pour effectuer une récupération d'énergie, par exemple.

La machine peut trouver des applications autres que l'entraînement de cabine d'ascenseurs.

L'expression « comportant un » doit être comprise comme étant synonyme de « comportant au moins un » sauf si le contraire est spécifié.

## Revendications

1. Machine électrique tournante comportant :
- un stator (2) à bobinage concentré, comportant des dents (4) dépourvues d'épanouissements polaires et des bobines (5) disposées sur les dents, ces dernières ayant des faces d'extrémité (10) convexes vers le rotor,
- un rotor (3) comportant une armature (12) définissant une surface cylindrique (13) et des aimants permanents (14) ayant des faces intérieures (16) qui sont des portions de cylindre épousant la forme de la surface cylindrique (13) de l'armature (12) et ayant des faces extérieures qui sont planes (17) et dirigées vers le stator.

2. Machine électrique selon la revendication précédente, dans laquelle le rotor (3) est extérieur.

3. Machine électrique selon la revendication 1, dans laquelle le rotor (3) est intérieur.

4. Machine électrique selon l'une quelconque des revendications précédentes, dans laquelle les aimants (14) sont monolithiques.

5. Machine électrique selon l'une quelconque des revendications précédentes, dans laquelle les faces d'extrémité (10) des dents sont des portions de cylindre.

6. Machine électrique selon la revendication précédente, dans laquelle les portions de cylindre ont un rayon de courbure plus faible que la distance *d* séparant le sommet des dents et l'axe de rotation (X).

7. Machine selon la revendication 6, le rayon de courbure allant de 0,5 *d* à 0,7 *d.*

8. Machine selon l'une quelconque des revendications précédentes, dans laquelle les faces sensiblement planes (17) des aimants sont sensiblement perpendiculaires aux rayons passant par l'axe de rotation et coupant les aimants (14) à mi-longueur.

9. Machine selon l'une quelconque des revendications 1 à 8, comportant un nombre de pôles au rotor compris entre 8 et 32.

10. Machine selon l'une quelconque des revendications 1 à 8, comportant un nombre de dents au stator compris entre 12 et 48.

11. Machine selon l'une quelconque des revendications précédentes, les dents du stator ayant des premières extrémités axiales (4a) et des deuxièmes extrémités axiales (4b) décalées angulairement par rapport aux premières.

12. Machine selon la revendication 11, le décalage angulaire étant supérieur ou égal à 0,9.2Π/3P, où P désigne le nombre de pôles rotor.

13. Machine selon la revendication 11, le décalage angulaire valant 2Π/3P.

14. Machine selon la revendication 11, le décalage angulaire étant supérieur ou égal à 0,9 Π/S, où S désigne le nombre d'encoches stator, dans le cas où Π/S est supérieur à 2Π/3P, P désignant le nombre de pôles rotor.

15. Machine selon la revendication 14, le décalage angulaire valant Π/S.

16. Machine selon l'une quelconque des revendications précédentes, les aimants étant collés par leur face intérieure sur la surface cylindrique (13) de l'armature (12).

17. Procédé d'entraînement d'une cabine d'ascenseur, consistant à utiliser une machine telle que définie plus haut dans l'une quelconque des revendications 1 à 15.

18. Procédé selon la revendication 17, dans lequel la machine est utilisée sans réduction.

19. Procédé selon la revendication 17, dans lequel la machine est utilisée avec un rapport de réduction inférieur ou égal à 4.

20. Ascenseur comportant une cabine entraînée par une machine telle que définie dans l'une quelconque des revendications 1 à 16.
